# EUROPEAN PATENT SPECIFICATION

(11) **EP 4 482 906 B1**
(45) Date of publication and mention of the grant of the patent: **27.08.2025**
(21) Application number: 23712484.7
(22) Date of filing: 15.03.2023
(51) Int. Cl.: C09K 3/00, C09K 3/18, C02F 103/42

(54) **CHEMICAL COMPOSITION FOR INCREASING DENSITY OF LIQUIDS**
CHEMISCHE ZUSAMMENSETZUNG ZUR ERHÖHUNG DER DICHTE VON FLÜSSIGKEITEN
COMPOSITION CHIMIQUE DESTINÉ À L'AUGMENTATION DE LA DENSITÉ DES LIQUIDES

(30) Priority: 15.03.2022 ES 202200019
(43) Date of publication of application: 01.01.2025
(73) Proprietor: Abdoh, Ibrahim y Autef, 12628 Distriyadh (SA); Ibáñez de Alba, Antonio, 13250 Daimiel, Ciudad Real (ES)
(72) Inventor: IBÁÑEZ DE ALBA, Antonio, 13250 Daimiel (Ciudad Real) (ES)
(74) Representative: Isern Patentes y Marcas S.L.
(86) International application number: PCT/EP2023/056666
(87) International publication number: WO 2023/175038

(56) References cited:
- ES-A1- 2 825 223
- ES-B1- 2 224 788

## Description

### Technical Field

The present invention relates to the field of the chemical industry and, more particularly, to the development of a new composition with suitable properties to increase the density of liquids. The invention also refers to multiple applications of the new composition, both in swimming pools and sports use.

### Background of the invention

Increasing the density of water where sports and leisure activities or rehabilitation take place is a field of interest for several reasons, including the associated increase of buoyancy and floatability which can be observed, which facilitates swimming to unexperienced people and decreases effort required for the practice of sports such as water polo or for movements of injured or weakened people.

Many approaches have been inspired by the composition of the Dead Sea, where the high salinity gives rise to high floatability and, additionally to the lack of animal and plant life. Such approaches have focused in adding salts to water, in order to achieve a composition similar to that of the Dead Sea, wherein the mean salt content is 331.7 g/l and chlorides (sodium, magnesium, calcium and potassium chloride) are the main salts, bromides and sulphates being also present.

Thus, for instance, Spanish patent application ES2224788A1 discloses adding chloride salts to water with the aim of increasing density, wherein water use is proposed for sports, swimming pools, rehabilitation baths, ponds or artificial beaches. A formulation comprising 4.66 g of potassium chloride, 466.56 g of sodium chloride and 528.78 g of magnesium chloride in 1 kg of dry product is disclosed. Due to its high content in salts, the formulation can control microbial contamination and results in a decrease of the freezing point when added to water.

A similar approach can be found in Chinese patent application CN1249166A, which discloses a place similar to Dead Sea for swimming and playing containing water to which a composition has been added which contains 60% sodium chloride, 30% calcium chloride, 10% potassium chloride. It is preferred that the suitable amount of the composition is added so that the specific weight is higher than that of human body and the human body can float over the water.

A composition for regulating water density comprising a mixture of calcium, sodium and magnesium chlorides is also disclosed in Spanish patent application ES2155372A1, wherein the compounds can be formulated in any proportion. The main application of the composition is increasing density in water for swimming pools and rehabilitation baths, in order to increase people floatability.

United States patent application US4945908A discloses an apparatus and a process for phototherapy combining irradiation similar to the one that could be received in Dead Sea area with a bath with water with a composition resembling that of Dead Sea water, comprising magnesium, calcium, sodium, potassium, strontium, lithium, chloride, bromide, sulfate, hydrogen carbonate and other salts.

ES 2 825 223 A1 describes a formulation to increase the density of liquids comprising potassium citrate and sodium citrate.

As it is considered that high chloride content, particularly sodium chloride and magnesium chloride, is corrosive and increases rust, chloride content has been tried to be reduced in many compositions and formulations with other water-soluble salts have been proposed for increasing water density.

As another prior art closest to the present invention, different carbonates, such as potassium carbonate, can be mentioned, which allow increasing the density of liquids, but have the problem of being very corrosive and oxidizing. A similar problem can be found with some other salts and acids, such as phosphoric acid, aluminium chloride, sodium sulfate, sulfuric acid, which are compounds with multiple properties, among which it is worth mentioning its ability to increase the density of liquids with the disadvantage of its corrosive and oxidizing effect. Thus, they are not suitable for many of the sports, recreational and bathroom applications in pools.

International patent application WO2016/113443 discloses a formulation for increasing water density comprising sodium gluconate, monosodium glutamate, magnesium chloride, sodium chloride, sodium carbonate, magnesium carbonate and glycerin. Thus, the composition is based on sodium and magnesium salts. The formulation is used to increase the density of water, for rehabilitation pools, swimming pools, spas, tanks, reservoirs, artificial beaches, competitive sports pools, as well as for skin disorders. Additionally to comprising carbonates, another of the components is monosodium glutamate, a compound that is known to produce some intolerances when added to food, particularly Chinese food, so that is presence in water can be a cause of concern for some people. Sodium gluconate, in turn, when added to water, is a compound known to give rise to a sort of paste after time.

In industrial fields remote from the field of the present invention (which is the field of modification of water intended for sports, leisure, bathing and rehabilitation and therapy applied to human therapy, where the chemically modified water is expected to contact human skin and accidental ingestion of water cannot be discarded), other compositions for increasing water density have been proposed where the use of chlorides is avoided. For instance, Spanish patent application ES2843423A1 discloses a formulation comprising potassium citrate, sodium citrate, monoethylene glycol, monopropylene glycol and azoles. The composition is specially designed for the industry of wind aerogenerators and exhibits a very high density that would make difficult, or almost impossible, any movement of a person that could have a part of, or the whole the body, introduced into that composition. Additionally, two of the compounds, monoethylene glycol and monopropylene glycol can be a threat to the environment, because they can easily penetrate the soil and contaminate groundwater and nearby streams; moreover, its use as non-reacted components in formulations for direct internal or external human/animal contact, including ingestion, inhalation and skin contact, is not recommended.

It would be advisable to design a composition for increasing water density that could overcome the drawbacks of other compositions of the state of art designed for that purpose, being suitable for being added to water intended to be used for sports, swimming, bathing and leisure activities of human beings, or rehabilitation baths, where people can move but with an increased density which could make people's movements easier, more comfortable and less painful; where the use of chlorides (particularly, sodium and magnesium chloride) is avoided or reduced, which composition includes not expensive water-soluble salts, where the number of components is not very high in order to simplify the preparation and reducing costs, comprising components not hazardous for the environment or human health, which are preferably already used for cosmetic and/or medicinal purposes and also, and preferably, which are already authorized as food additives or have been traditionally used for culinary purposes (thus minimizing the risk of adverse reactions if they are accidentally ingested), and, if possible, not being known to provoke allergic reactions, so that their presence is not likely to provoke any rejection by the water users. Also preferably, at least one or as much as possible of the components should have high density by themselves, helping to minimize the necessary amount to use, and/or have preservation properties by themselves. And, in order to design such composition, compounds such as gluconates (which forms easily a paste when added to water, particularly after a time of having been added) should be avoided, in order to prevent the appearance of unpleasant and unaesthetic lumps, scaling deposited in the water reservoir or gelation of the liquid where people are bathing, swimming, playing any other sport or receiving rehabilitation therapy.

The present invention provides a solution to such a problem.

### Detailed description of the invention

The present invention arises as a solution to the problems derived from the compositions of the state of the art. It is, therefore, a new formula with a composition that has proven to be particularly effective in increasing the density of liquids, especially water, without entailing the harmful, corrosive and oxidizing or unwanted effects of other products (such as risks of gelation or formation of a paste, risks for the environment or too high density which makes difficult people's movements) and comprising components already used as authorized food additives, cosmetic ingredients and/or medicament ingredients which would not make expectable harmful effects due to accidental ingestion.

Thus, the present invention relates to a new composition intended to increase density of a liquid, characterized in that it comprises, in weight percent:
- potassium citrate, in a percentage comprised between 1.2% and 63%;
- sodium citrate, in a percentage comprised between 1.5% and 66%;
- potasium chloride, in a percentage comprised between 2.2% and 97%;
- potasium ascorbate, in a percentage comprised between 5.1% and 94%;
- sodium benzoate, in a percentage comprised between 1.03% and 22%.

Preferably, the liquid is water or an aqueous solution. More preferably, the liquid is water intended to be used for sports, bathing, swimming, recreation or leisure uses, or for rehabilitation baths.

The composition comprises components that are not particularly expensive, so that the addition to the composition to a liquid, particularly water or an aqueous solution, is an easy and economical way of increasing density of the liquid, especially water or aqueous solutions, particularly those for sporting, bathing or swimming uses, including bathing in rehabilitation pools or bathtubs where injured or aged people perform physical rehabilitation exercise to improve or accelerate recovery.

All components of the composition object of the invention have the additional advantage of being environmentally friendly. Besides, they are components that do not present any type of toxicity in small quantities; they are not corrosive or oxidizing either. Moreover, some of them are compounds that are in the list of food additives approved for use in foods in the European Union (Regulation (EU) No 1333/2008, what is an indication of safety when used in water for bathing and/or sport uses. Some of them, additionally, are compounds or salts of compounds that appear in reactions of or take part in the metabolism of human beings, animals and/or plants and which are present in plants traditionally consumed by human beings or, even, which are included in cosmetics and/or medicaments.

For instance, citrate is the ionized form of citric acid, one of the compounds that appear in the tricarboxylic acid metabolic pathway, the three-stage process by which living cells break down organic fuel molecules, in the presence of oxygen, to obtain the energy they need to grow and divide. Citric acid is present in many fruits, especially in citrus fruits such as orange, lemon and mandarin.

Potassium citrate (E-332 in the EU list of authorized food additives) is used to regulate acidity; for instance, it is used in many soft drinks as a buffering agent. Medicinally, it may be used to control kidney stones derived from uric acid or cystine and it is employed as a non-irritating diuretic. It exhibits a density of 1980 kg/m³ at 25°C As indicated above, it can be present in the composition of the present invention in a weight percentage of 1.2% - 63%. Preferably, it is present in a percentage selected from the group of 10%, 25%, 30% or 50% w/w (weight percent with regard to the total weight of the composition). It is particularly preferred that the percentage is 50% w/w.

Sodium citrate (E-331 in the EU list of authorized food additives) is also used to regulate acidity in foods and drinks. It is also used in cosmetics for pH regulation. Medicinally, it may be used as alkalinizing agent to neutralize excess acid in the blood and urine, for the treatment of metabolic acidosis and chronic kidney disease. It exhibits a density of 1700 kg/m³ at 25°C As indicated above, it can be present in the composition of the present invention in a weight percentage of 1.5% - 66%. Preferably, it is present in a percentage selected from the group of 10%, 25%, 30% or 50% w/w (weight percent with regard to the total weight of the composition). It is particularly preferred that the percentage is 10% w/w.

Potassium chloride is a natural occurring salt that is present, among others, in sea water. It is one of the leadings salts that is being used in food as a viable sodium chloride replacement. It is used as flavour enhancer, flavouring agent, nutrient supplement, pH control agent, stabilizer and thickener. It has been recognized as GRAS (Generally Recognized As Safe) by the U.S. Food and Drug Administration, having no limitation for its use in food manufacturing but those marked by the levels necessary to obtain its intended effect in a product. Considered vital in the human body, it is on the World Health Organization's List of Essential Medicines, being administered to treat low blood potassium, both orally and intravenously. It exhibits a density of 1980 kg/m³ at 25°C. As indicated above, it can be present in the composition of the present invention in a weight percentage of 1.5% - 66%. Preferably, it is present in a percentage selected from the group of 10%, 25%, 30% or 50% w/w (weight percent with regard to the total weight of the composition). It is particularly preferred that the percentage is 30% w/w.

The presence of potassium chloride in the composition, in particular, means an additional advantage because it allows to use the composition to prevent freezing of the liquid (preferably, water or an aqueous solution) to which it is added, when the temperature is below -1 degree centigrade, even (and preferably) when the temperature is equal to or below- 10 degrees centigrade.

Ascorbate is the ionized form of ascorbic acid. Ascorbic acid, in turn, is a compound which exits as two isomeric (enantiomeric) forms, L and D. The L-isomer occurs naturally in many foods and is one form of vitamin C, a compound essential for humans and animals because it is a coenzyme with antioxidant activity involved in numerous metabolic reactions which helps to prevent certain diseases such as cancer, cardiovascular diseases, common cold, age-related muscular degeneration and cataract. It is used as a food additive (E-300) and cosmetic ingredient due to its antioxidant properties.

The potassium salt of ascorbic acid, potassium ascorbate, also exhibits a strong antioxidant activity and antitumoral properties.

Sodium benzoate is a natural preservative used in food industry (E-211 in the EU list of authorized food additives) and cosmetics, mainly for its antifungal properties. Its presence in the composition of the present invention contributes to prevent the presence of microorganisms.

In a particularly preferred embodiment of the invention, compatible with all the previous ones, the composition is characterized in that it contains, in weight percent:
- potassium citrate, in a percentage of 50%;
- sodium citrate, in a percentage of 10%;
- potassium chloride, in a percentage of 30%;
- potassium ascorbate, in a percentage of 7%;
- sodium benzoate, in a percentage of 3%.

The composition of the invention, in any of its embodiment, can be added to water within a broad range of concentrations which can vary from 1 g/cm³ to saturation.

It is also an object of the invention the use of the composition of the invention, or the use of a liquid (preferably water) characterized by comprising the composition object of the invention, for sports, bathing, swimming and/or leisure activities or for rehabilitation baths or pools. Being a liquid (water) for such purposes, a possible embodiment of that object of the invention is that the liquid is in a swimming pool, pond, tank, bathtub, raft, artificial beach or rehabilitation pool, or any other type of reservoir where a person can introduce a part of the body or the whole body. When the liquid is water, it is characterized by having a density greater than 1 g/l at room temperature (25°C). Preferably, the use of the composition of the invention, specifically, will be for increasing density of a liquid which is water for sporting, swimming, bathing and/or leisure activities or for rehabilitation bathing; additionally, the composition can be used for preventing growth of microorganisms in the liquid (water).

As used in the present application, the term "water" is intended to encompass not only pure water, but it must be understood in its broad common meaning which refers to the liquid that descends from the clouds as rain, forms streams, lakes and seas, whose main component is water but which also includes, naturally or due to human activity, salts and other compounds dissolved or suspended in it and, usually, also viruses and microscopical living beings. The term "chemically modified water of the invention" or "chemically modified water object of the invention" refers specifically to water to which a composition of the invention has been added, so that it can be said that it comprises the composition object of the invention.

Among the numerous applications of the composition, the following can be mentioned, without being limited to:
The chemically modified water object of the invention is for all types of applications in sports use, bathing in pools, rafts. A particularly relevant application, especially in the case of the preferred embodiment of the invention, is the sports use and for bathing in pools or water ponds or artificial beaches for bathing. Also relevant is the use in rehabilitation baths and pools, where injured, or aged, people can move easily and carry out physical exercises to facilitate their recovery (particularly, recovery from muscular or bone lesions or degeneration) or maintain fitness but where movement results less painful.

Therefore, the applications of the new composition are numerous, which means an important advantage with respect to other formulations described in the state of the art. As previously mentioned, unlike other compositions known to increase the density of water, the present formulation does not present any type of effect harmful to people's health.

Likewise, as a consequence of the presence of salts in the chemically modified water, it is possible to avoid growth and/or development of microorganisms or other polluting substances in it, a property that is favoured by the presence of sodium benzoate, as explained above. This means an additional advantage since, in this way, it will not be necessary to use decontaminating chemical substances in large quantities, which often cause contamination of water.

Due to its composition, particularly thanks to the presence of potassium chloride, the chemically modified water comprising the composition of the invention is ideal for withstanding low temperatures without freezing below minus -1 degrees centigrade (Celsius), preferably -10 degrees centigrade (Celsius). Thus, it can be considered that another aspect of the present invention is a procedure for preventing freezing of water and/or an aqueous solution in a swimming pool, pond, bathtub, raft, artificial beach or rehabilitation pool which is at a temperature below -1 degrees centigrade, preferably at a temperature equal to or below -10 degrees centigrade, wherein a composition of the invention is added to the water and/or aqueous solution.

### Example

With the aim of testing the advantages of the formulation object of the invention, an assay was carried out for which a formulation in accordance with the particularly preferred composition disclosed in the previous section was added. Specifically, a formulation was prepared that was characterized by containing, in weight percentage:
- potassium citrate, in a percentage of 50%;
- sodium citrate, in a percentage of 10%;
- potassium chloride, in a percentage of 30%;
- potassium ascorbate, in a percentage of 7%;
- sodium benzoate, in a percentage of 3%.

This formulation was added to a volume of 1 litre of water. Next, the salts were mixed at room temperature, subjecting the mixture to stirring until obtaining a homogeneous mixture. Freezing was not observed at low temperatures below minus -1 to -10 degrees centigrade.

Subsequently, a buoyancy test was carried out by introducing a heavy object into the chemically modified water, which floated on the surface of the water, thus demonstrating the density of the modified water with the composition object of the invention.

## Claims

1. A chemical composition for increasing density of a liquid, **characterized in that** it comprises, in weight percentage:
- potassium citrate, in a percentage comprised between 1.2% and 63%;
- sodium citrate, in a percentage comprised between 1.5% and 66%;
- potassium chloride, in a percentage comprised between 2.2% and 97%;
- potassium ascorbate, in a percentage comprised between 5.1% and 94%;
- sodium benzoate, in a percentage comprised between 1.03% and 22%.

2. The chemical composition according to claim 1, **characterized in that** it comprises, in weight percentage, potassium citrate in a weight percentage selected from the group of 10%, 25%, 30 and 50%.

3. The chemical composition according to any one of the preceding claims, **characterized in that** it comprises, in weight percentage, sodium citrate in a weight percentage selected from the group of 10%, 25%, 30% and 50%.

4. 3. The chemical composition according to any one of the preceding claims, **characterized in that** it comprises, in weight percentage, potassium chloride in a weight percentage selected from the group of 10%, 25%, 30% and 50%.

5. The chemical composition according to any one of the preceding claims, **characterized in that** it contains, in weight percentage:
- potassium citrate, in a percentage of 50%;
- sodium citrate, in a percentage of 10%;
- potassium chloride, in a percentage of 30%;
- potassium ascorbate, in a percentage of 7%;
- sodium benzoate, in a percentage of 3%.

6. The chemical composition according to any one of the preceding claims, wherein the liquid is water.

7. The chemical composition according to claim 6, where the liquid is water for sporting, swimming, bathing and/or leisure activities or for rehabilitation baths.

8. Use of a composition according to any one of claims 1 to 7 or a liquid comprising a composition according to any one of claims 1 to 6, for sporting, swimming, bathing and/or leisure activities or for rehabilitation bathing.

9. The use according to claim 8, where the liquid is water.

10. The use according to any one of claims 8 or 9, wherein the liquid is in a swimming pool, pond, tank, bathtub, raft, artificial beach or rehabilitation pool.

11. The use according to any one of claims 8 to 10 of a composition according to any one of claims 1 to 7 for increasing density of a liquid which is water for sporting, swimming, bathing and/or leisure activities or for rehabilitation bathing.

12. The use according to claim 11, for additionally preventing growth of microorganisms.

13. A procedure for preventing freezing of water and/or an aqueous solution in a swimming pool, pond, tank, bathtub, raft, artificial beach or rehabilitation pool which is at a temperature below -1 degrees centigrade, wherein a composition according any one of claims 1 to 7 is added to the water and/or aqueous solution.

14. The procedure according to claim 13, wherein the water and/or aqueous solution is at a temperature equal to or below -10 degrees centigrade.

## Patentansprüche

1. Chemische Zusammensetzung zur Erhöhung der Dichte einer Flüssigkeit, **dadurch gekennzeichnet, dass** sie Folgendes in Gewichtsprozent umfasst:
- Kaliumcitrat in einem Anteil zwischen 1,2 % und 63 %;
- Natriumcitrat in einem Anteil zwischen 1,5 % und 66 %;
- Kaliumchlorid in einem Anteil zwischen 2,2 % und 97 %;
- Kaliumascorbat in einem Anteil zwischen 5,1 % und 94 %;
- Natriumbenzoat in einem Anteil zwischen 1,03 % und 22 %.

2. Chemische Zusammensetzung nach Anspruch 1, **dadurch gekennzeichnet, dass** sie, in Gewichtsprozent, Kaliumcitrat in einem Gewichtsprozentanteil, der aus der Gruppe von 10 %, 25 %, 30 und 50 % ausgewählt ist, enthält.

3. Chemische Zusammensetzung nach einem der vorhergehenden Ansprüche, **dadurch gekennzeichnet, dass** sie, in Gewichtsprozent, Natriumcitrat in einem Gewichtsprozentanteil, der aus der Gruppe von 10 %, 25 %, 30 % und 50 % ausgewählt ist, enthält.

4. Chemische Zusammensetzung nach einem der vorhergehenden Ansprüche, **dadurch gekennzeichnet, dass** sie, in Gewichtsprozent, Kaliumchlorid in einem Gewichtsprozentanteil, der aus der Gruppe von 10 %, 25 %, 30 % und 50 % ausgewählt ist, enthält.

5. Chemische Zusammensetzung nach einem der vorhergehenden Ansprüche, **dadurch gekennzeichnet, dass** sie Folgendes in Gewichtsprozent enthält:
- Kaliumcitrat in einem Anteil von 50 %;
- Natriumcitrat in einem Anteil von 10 %;
- Kaliumchlorid in einem Anteil von 30 %;
- Kaliumascorbat in einem Anteil von 7 %;
- Natriumbenzoat in einem Anteil von 3 %.

6. Chemische Zusammensetzung nach einem der vorhergehenden Ansprüche, wobei die Flüssigkeit Wasser ist.

7. Chemische Zusammensetzung nach Anspruch 6, wobei die Flüssigkeit Wasser für Sport-, Schwimm-, Bade- und/oder Freizeitaktivitäten oder für Rehabilitationsbäder ist.

8. Verwendung einer Zusammensetzung nach einem der Ansprüche 1 bis 7 oder einer Flüssigkeit, die eine Zusammensetzung nach einem der Ansprüche 1 bis 6 umfasst, für Sport-, Schwimm-, Bade- und/oder Freizeitaktivitäten oder für Rehabilitationsbäder.

9. Verwendung nach Anspruch 8, wobei die Flüssigkeit Wasser ist.

10. Verwendung nach einem der Ansprüche 8 oder 9, wobei sich die Flüssigkeit in einem Schwimmbecken, Teich, Tank, einer Badewanne, einem Floß, künstlichen Strand oder Rehabilitationsbecken befindet.

11. Verwendung nach einem der Ansprüche 8 bis 10 einer Zusammensetzung nach einem der Ansprüche 1 bis 7 zur Erhöhung der Dichte einer Flüssigkeit, die Wasser für Sport-, Schwimm-, Bade- und/oder Freizeitaktivitäten oder für Rehabilitationsbäder ist.

12. Verwendung nach Anspruch 11 zur zusätzlichen Verhinderung des Wachstums von Mikroorganismen.

13. Verfahren zur Verhinderung des Einfrierens von Wasser und/oder einer wässrigen Lösung in einem Schwimmbecken, Teich, Tank, einer Badewanne, einem Floß, künstlichen Strand oder Rehabilitationsbecken, das eine Temperatur unter -1 Grad Celsius aufweist, wobei dem Wasser und/oder der wässrigen Lösung eine Zusammensetzung nach einem der Ansprüche 1 bis 7 zugesetzt wird.

14. Verfahren nach Anspruch 13, wobei das Wasser und/oder die wässrige Lösung eine Temperatur von -10 Grad Celsius oder darunter aufweist.

## Revendications

1. Composition chimique permettant d'augmenter la densité d'un liquide, **caractérisée en ce qu'**elle comprend, en pourcentage en poids :
- citrate de potassium, dans un pourcentage compris entre 1,2 % et 63 % ;
- citrate de sodium, dans un pourcentage compris entre 1,5 % et 66 % ;
- chlorure de potassium, dans un pourcentage compris entre 2,2 % et 97 % ;
- ascorbate de potassium, dans un pourcentage compris entre 5,1 % et 94 % ;
- benzoate de sodium, dans un pourcentage compris entre 1,03 % et 22 %.

2. Composition chimique selon la revendication 1, **caractérisée en ce qu'**elle comprend, en pourcentage en poids, du citrate de potassium dans un pourcentage en poids choisi dans le groupe des 10 %, 25 %, 30 et 50 %.

3. Composition chimique selon l'une quelconque des revendications précédentes, **caractérisée en ce qu'**elle comprend, en pourcentage en poids, du citrate de sodium dans un pourcentage en poids choisi dans le groupe des 10 %, 25 %, 30 % et 50 %.

4. Composition chimique selon l'une quelconque des revendications précédentes, **caractérisée en ce qu'**elle comprend, en pourcentage en poids, du chlorure de potassium dans un pourcentage en poids choisi dans le groupe des 10 %, 25 %, 30 % et 50 %.

5. Composition chimique selon l'une quelconque des revendications précédentes, **caractérisée en ce qu'**elle contient, en pourcentage en poids :
- citrate de potassium, dans un pourcentage de 50 % ;
- citrate de sodium, dans un pourcentage de 10 % ;
- chlorure de potassium, dans un pourcentage de 30 % ;
- ascorbate de potassium, dans un pourcentage de 7 % ;
- benzoate de sodium, dans un pourcentage de 3 %.

6. Composition chimique selon l'une quelconque des revendications précédentes, dans laquelle le liquide est de l'eau.

7. Composition chimique selon la revendication 6, où le liquide est de l'eau pour le sport, la natation, le bain et/ou les activités de loisir ou les bains de rééducation.

8. Utilisation d'une composition selon l'une quelconque des revendications 1 à 7 ou d'un liquide comprenant une composition selon l'une quelconque des revendications 1 à 6, pour le sport, la natation, le bain et/ou les activités de loisirs ou le bain de rééducation.

9. Utilisation selon la revendication 8, où le liquide est de l'eau.

10. Utilisation selon l'une quelconque des revendications 8 ou 9, dans laquelle le liquide est dans une piscine, un étang, un réservoir, une baignoire, un radeau, une plage artificielle ou une piscine de rééducation.

11. Utilisation selon l'une quelconque des revendications 8 à 10 d'une composition selon l'une quelconque des revendications 1 à 7 permettant d'augmenter la densité d'un liquide qui est de l'eau pour le sport, la natation, le bain et/ou les activités de loisirs ou le bain de rééducation.

12. Utilisation selon la revendication 11, permettant d'empêcher en outre la croissance de micro-organismes.

13. Procédé permettant d'éviter le gel de l'eau et/ou d'une solution aqueuse dans une piscine, un étang, un réservoir, une baignoire, un radeau, une plage artificielle ou un bassin de rééducation qui est à une température en-dessous de -1 degré centigrade, dans lequel une composition selon l'une quelconque des revendications 1 à 7 est ajoutée à l'eau et/ou à la solution aqueuse.

14. Procédure selon la revendication 13, l'eau et/ou la solution aqueuse est à une température égale ou en dessous de -10 degrés centigrades.
